(19) Europäisches Patentamt
European Patent Office
Office européen des brevets

(11) Veröffentlichungsnummer: **0 315 082 B1**

(12) # EUROPÄISCHE PATENTSCHRIFT

(45) Veröffentlichungstag der Patentschrift: **06.05.92**

(51) Int. Cl.⁵: **C09D 5/03**, C09D 5/46

(21) Anmeldenummer: **88118040.0**

(22) Anmeldetag: **29.10.88**

(54) **Verfahren zur Erhöhung der elektrostatischen Aufladbarkeit von Pulverlacken oder Pulvern und deren Verwendung zur Oberflächenbeschichtung von festen Gegenständen.**

(30) Priorität: **05.11.87 DE 3737496**

(43) Veröffentlichungstag der Anmeldung: **10.05.89 Patentblatt 89/19**

(45) Bekanntmachung des Hinweises auf die Patenterteilung: **06.05.92 Patentblatt 92/19**

(84) Benannte Vertragsstaaten: **AT CH DE FR GB IT LI NL**

(56) Entgegenhaltungen:
**EP-A- 0 021 448**
**DE-A- 3 600 395**
**US-A- 4 581 293**

**PATENT ABSTRACTS OF JAPAN, Band 11, Nr. 49 (P-547)[2496], 14. Februar 1987; & JP-A-61 217 064 (CANON INC.) 26-09-1986**

(73) Patentinhaber: **HOECHST AKTIENGESELLSCHAFT**
**Postfach 80 03 20**
**W-6230 Frankfurt am Main 80(DE)**

(72) Erfinder: **Macholdt, Hans-Tobias, Dr.**
**Waldstrasse 20**
**W-6100 Darmstadt(DE)**
Erfinder: **Sieber, Alexander, Dr.**
**Wartburgstrasse 76**
**W-6230 Frankfurt am Main 80(DE)**
Erfinder: **Godau, Claus**
**Halbritterstrasse 9**
**W-6229 Kiedrich(DE)**
Erfinder: **Manz, Albrecht, Dr.**
**Pappelweg 15**
**W-6200 Wiesbaden(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.08/2.18/2.0)

## Beschreibung

Verfahren zur Erhöhung der elektrostatischen Aufladbarkeit von Pulverlacken oder Pulvern und deren Verwendung zur Oberflächenbeschichtung von festen Gegenständen

Die vorliegende Erfindung betrifft ein Verfahren zur Erhöhung der elektrostatischen Aufladbarkeit von Pulverlacken oder Pulvern, in dem man in Pulverlacke oder Pulver salzartige, kationische Verbindungen bestimmter Struktur homogen einarbeitet, sowie die Verwendung der so behandelten Pulverlacke oder Pulver zur Oberflächenbeschichtung von festen Gegenständen (Werkstücken).

Die Pulverlacktechnologie kommt u.a. beim Lackieren von Kleingegenständen, wie Gartenmöbeln, Campingartikeln, Haushaltsgeräten, Fahrzeugkleinteilen, Kühlschränken und Regalen, sowie beim Lackieren von kompliziert geformten Werkstücken zur Anwendung. Größenteils werden metallische Gegenstände lackiert, aber auch beispielsweise Kunststoffe sind mit der Pulverlacktechnologie lackierbar. Gegenüber anderen Lackierverfahren, wie Streichen, Tauchen und konventionellem Spritzen, hat die Pulverlacktechnologie eine Reihe von Vorteilen. Das Lackierverfahren arbeitet beispielsweise lösungsmittelfrei und damit umweltfreundlich und kostengünstiger.

Auch hinsichtlich der Entsorgung, Arbeitssicherheit (Abwesenheit brennbarer Lösungsmittel), Arbeitshygiene und des Umweltschutzes sowie des Zeitaufwandes für einen Lackiervorgang ist das Verfahren vorteilhaft.

Die Pulverlacktechnologie basiert auf dem Prinzip der elektrostatischen Aufladung. Der Pulverlack bzw. das Pulver enthält seine elektrostatische Ladung im allgemeinen nach einem der beiden folgenden Verfahren:

a) Beim Corona-Verfahren wird der Pulverlack bzw. das Pulver an einer geladenen Corona vorbeigeführt und hierbei aufgeladen.

b) Beim triboelektrischen bzw. elektrokinetischen Verfahren wird vom Prinzip der Reibungselektrizität Gebrauch gemacht. Der Pulverlack bzw. das Pulver erhält im Sprühgerät eine elektrostatische Aufladung, die der Ladung des Reibungspartners, im allgemeinen ein Schlauch oder Sprührohr (beispielsweise aus Polytetrafluorethylen), entgegengesetzt ist.

Auch eine Kombination von beiden Verfahren ist möglich.

Als Pulverlackharze werden typischerweise Epoxidharze, carboxyl- und hydroxylgruppenhaltige Polyesterharze und Acrylharze zusammen mit den entsprechenden Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Typische Härterkomponenten für Epoxidharze sind beispielsweise Säureanhydride, Imidazole sowie Dicyandiamid und deren Abkömmlinge. Für hydroxylgruppenhaltige Polyesterharze sind die Härterkomponenten typischerweise beispielsweise Säureanhydride, verkappte Isocyanate, Bisacylurethane, Phenolharze, Melaminharze, für carboxylgruppenhaltige Polyesterharze typischerweise beispielsweise Triglycidylisocyanurate oder Epoxidharze. In Acrylharzen kommen typischerweise beispielsweise Oxazoline, Isocyanate, Triglycidylisocyanurate oder Dicarbonsäuren als Härterkomponenten zur Anwendung.

Das Verfahren der Aufladung der Pulverlacke bzw. Pulver durch Reibungselektrizität hat gegenüber dem Verfahren der Corona-Aufladung eine Reihe von Vorteilen. So entfällt beispielsweise der Aufwand für Erzeugung und Isolation der Hochspannung zum Betreiben der Corona, was beispielsweise die Arbeitssicherheit, insbesondere im Handbetrieb, erhöht. Zudem werden dadurch die Sprühgeräte leichter, was wiederum vor allem für Handsprühgeräte von Bedeutung ist.

Ferner weisen Pulverlacke, die durch Reibung elektrostatisch aufgeladen werden, eine gleichmäßigere Ladung auf und neigen weniger zum Rücksprühen. (Unter "Rücksprühen" versteht man den Effekt, daß Pulverlackteilchen, die bereits auf dem besprühten Werkstück haften, sich von diesem wiederum lösen und nach allen Seiten davonfliegen.) Außerdem können die Sprühlanzen der Applikationsgeräte, die nach dem Prinzip der Reibungsaufladung arbeiten, problemlos um mehrere Meter verlängert werden, dichter an den zu besprühenden Körper herangeführt und damit auch in Rohre oder Hohlräume eingeführt werden.

Dagegen tritt bei Pulverlacken, die nach dem Verfahren der Reibungsaufladung versprüht werden, häufig das Problem auf, daß die Pulverteilchen ungenügend aufgeladen werden und eine schlechten Umgriff am besprühten Werkstück ergeben. (Der Ausdruck "Umgriff" ist ein Maß dafür, inwieweit sich ein Pulverlack am besprühten Werkstück auch an Rückseiten, Hohlräumen, Spalten und vor allem im Sprühschatten und an Innenkanten und -ecken absetzt.)

Der Mangel ungenügender Aufladung ist vor allem bei Pulverlacken, die auf Basis von Polyesterharzen, insbesondere carboxylgruppenhaltigen Polyestern, oder auf Basis von sogenannten Mischpulvern hergestellt worden sind, zu beobachten. Unter Mischpulvern versteht man Pulverlacke, deren Harzbasis aus einer Kombination von Epoxidharz und carboxylgruppenhaltigem Polyesterharz besteht. Die Mischpulver bilden die Basis für die in der Praxis am häufigsten vertretenen Pulverlacke.

Während sich Pulverlacke auf reiner Epoxidharzbasis noch relativ gut triboelektrisch versprühen lassen, arbeitet das Verfahren (triboelektrische Versprühung) mit Mischpulvern oder Pulverlacken auf Polyesterharzbasis im allgemeinen nicht zufriedenstellend. Das bedeutet, daß man bei triboelektrisch versprühten Pulverlacken hinsichtlich der Auswahl der Harze stark eingeschränkt ist. Dies ist insofern sehr unbefriedigend, als gerade über die Harzbasis die verschiedensten Eigenschaften eines Pulverlackes eingestellt werden können. Daher können heute nicht in jedem Fall alle anwendungstechnischen Erfordernisse mit triboelektrisch versprühten Pulverlacken erfüllt werden, was die noch geringe Verbreitung dieses an sich vorteilhaften Verfahren erklärt.

Es bestand daher ein Bedürfnis, Pulverlacken oder Pulvern auf verschiedenster Harzbasis, insbesondere triboelektrisch versprühbaren Pulverlacken, eine höhere und gleichmäßigere Aufladung verleihen zu können, sowie eine möglichst hohe und einheitliche Abscheidequote beim Besprühen auf dem Werkstück zu erreichen, wobei die sonstigen Eigenschaften des Pulverlackes, wie die mechanischen Eigenschaften und die Verarbeitbarkeit, möglichst wenig beeinträchtigt werden sollen.

Ein bekanntes Verfahren zur Verbesserung der elektrostatischen Aufladung von triboelektrisch versprühbaren Pulverlacken besteht in der Zugabe von Aluminiumoxid (F. Haselmeyer, K. Oehmichen, DEFAZET, 27. Jahrg. Nr. 11, 1973, Seite 529). Bei diesem Vorgehen wird das Aluminiumoxid dem fertigen Pulverlack vor dem Versprühen zugesetzt, typischerweise in Konzentrationen zwischen 1 und 5 %. Hierbei wird aber das genannte Material in den Pulverlack nicht homogen eingearbeitet, was vor allem bei kontinuierlicher Arbeitsweise zu Schwierigkeiten führt.

Wird andererseits das Aluminiumoxid in die Pulverlacke homogen eingearbeitet (dispergiert), so verliert es seine aufladungserhöhende Wirkung. Die Schwierigkeiten beim Zusatz von beispielsweise Aluminiumoxid bestehen darin, daß in der Praxis nur eine vorübergehende Verbesserung der elektrostatischen Aufladung erzielt wird. Hinzu kommen Probleme der einheitlichen Vermengung von Pulverlack und Zusatzstoff, der Entmischung von Pulverlack und Zusatzstoff sowie Probleme der Abrasion in der Aufladezone.

Ein anderer Versuch, die Aufladung von triboelektrisch versprühbaren Pulverlacken zu verbessern, wird in der DE-OS 3600395 A1 beschrieben. In dieser Offenlegungsschrift wird das an sich bekannte Problem der mangelnden Aufladbarkeit von triboelektrisch versprühbaren Pulverlacken ebenfalls dargelegt und als Lösungsmöglichkeit in nur allgemeiner Weise der Zusatz von kapillaraktiven Netzmitteln auf Basis von quaternären Ammoniumverbindungen oder von beispielsweise metallhaltigen Pigmenten, vorzugsweise Zinkstaub, postuliert.

Überraschenderweise wurde nun gefunden, daß spezielle, salzartige, kationische Verbindungen die elektrostatische Aufladbarkeit von Pulverlacken und Pulvern, insbesondere von triboelektrisch versprühten Pulverlacken erhöhen, wenn sie in diese homogen eingearbeitet werden. Die dadurch bewirkte höhere elektrostatische Aufladung hat als weiteren positiven Effekt eine gleichmäßigere Abscheidung des versprühten Pulverlacks oder Pulvers auf dem beschichteten Gegenstand (Werkstück) zur Folge.

Gegenstand der vorliegenden Erfindung ist daher ein Verfahren zur Erhöhung der elektrostatischen Aufladbarkeit von zur Oberflächenbeschichtung von festen Gegenständen (Werkstücken) vorgesehenen Pulverlacken oder Pulvern, indem man in Pulverlacke oder Pulver mindestens eine salzartige, kationische Verbindung der allgemeinen Formel (1)

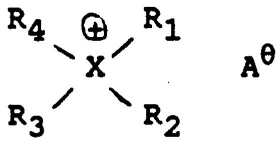

(1)

in welcher $R_1$, $R_2$, $R_3$ und $R_4$ unabhängig voneinander Wasserstoffatome, geradkettige oder verzweigte Alkylgruppen von1 bis 30 Kohlenstoffatomen, vorzugsweise von 1 bis 22 Kohlenstoffatomen, ein- oder mehrkernige cycloaliphatische Reste von 5 bis 12 Kohlenstoffatomen, wie beispielsweise Cyclohexyl, Cyclopentyl, Oxethylgruppen der allgemeinen Formel $-(CH_2-CH_2-O)_n-R$, worin n eine Zahl von 1 bis 10, bevorzugt von 1 bis 4 darstellt und R ein Wasserstoffatom oder eine Alkyl($C_1$-$C_4$)-, Acyl-, wie beispielsweise die Acetyl-, Benzoyl- oder Naphthoylgruppe, darstellen, ferner ein- oder mehrkernige aromatische Reste, wie beispielsweise einen Phenyl-, 1-Naphthyl-, 2-Naphthyl-, Tolyl- oder Biphenylrest und/oder araliphatische

Reste, wie beispielsweise den Benzylrest, bedeuten, wobei die aliphatischen, aromatischen und araliphatischen Reste durch Hydroxy-, Alkoxy($C_1$-$C_4$)-, sekundäre oder tertiäre Aminogruppen, wie beispielsweise Monoalkyl($C_1$-$C_6$)-amino-oder Dialkyl($C_1$-$C_6$)-aminogruppen, ferner Säureamidgruppen, vorzugsweise aliphatische Säureamidgruppen, wie beispielsweise die Gruppe $-CO-\overset{}{\underset{H}{N}}-R_1$ oder

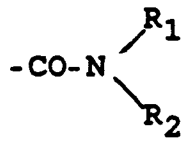 ,

worin $R_1$ und $R_2$ Alkyl-($C_1$-$C_{30}$)-gruppen bedeuten, ferner Säureimidgruppen, wie beispielsweise die Phthalimid- oder Naphthalimidgruppe, wobei die Alkyl-, Cycloalkyl-, Aralkyl-und Arylreste für $R_1$ bis $R_4$ durch Fluor-, Chlor- oder Bromatome, die aliphatischen Reste insbesondere durch 1 bis 33 Fluoratome substituiert sein können, und in welcher X ein Phosphor-, Arsen- oder Antimonatom, bevorzugt ein Phosphoratom bedeutet, wobei für den Fall, daß X ein Arsen-oder Antimonatom darstellt, mindestens einer der Reste $R_1$-$R_4$ kein Wasserstoffatom ist, und $A^{\theta}$ das Äquivalent eines anorganischen Anions, wie beispielsweise Halogenid, bevorzugt Bromid oder Chlorid, oder Sulfat, Hydrogensulfat, Hydroxid, Tetrafluoroborat, Hexafluorophosphat, Thiocyanat, Perchlorat, Hexafluoroarsenat, Phosphat, wie meta- oder ortho-Phosphat, Molybdat, Wolframat, Phosphomolybdat oder das Äquivalent eines Anions einer Iso- oder Heteropolysäure des Phosphors, Molybdäns, Wolframs oder Siliziums, oder einer Phosphonsäure, oder das Äquivalent eines organischen Anions, wie beispielsweise einer aliphatischen oder aromatischen Carbon- oder Sulfonsäure, bevorzugt einer Phenolcarbon- oder -sulfonsäure bzw. Naphtholcarbon- oder -sulfonsäure, wie beispielsweise Toluol-4-sulfonat, Phenylsulfonat, Alkylsulfonat, Perfluoralkylsulfonat, wie beispielsweise Trifluormethansulfonat, 2-Hydroxyphenyl-3-carboxylat, 2-Hydroxynaphthyl-3-carboxylat, 2-Hydroxynaphthyl-6-carboxylat oder 4-Methylphenyl-1-sulfonat darstellt, in einer Menge von etwa 0,01 bis etwa 10 Gewichtsprozent, vorzugsweise von etwa 0,1 bis etwa 5 Gewichtsprozent, homogen einarbeitet, wobei die salzartigen, kationischen Verbindungen der genannten allgemeinen Formel (1) im Pulver bzw. im Lacksystem gelöst oder dispergiert werden.

An Einzelverbindungen der genannten allgemeinen Formel (1) seien beispielsweise folgende aufgeführt: Tetraphenylphosphonium-chlorid, Benzyltriphenylphosphonium-chlorid, Methyltriphenylphosphonium-bromid, Tetrabutylphosphonium-bromid, Dodecyltributylphosphonium-bromid, Phthalimidomethyltributylphosphonium-bromid, Hexadecyltributylphosphonium-bromid, Octadecyltributylphosphonium-bromid, Methyltriphenylphosphonium-tetrafluoroborat, Ethyltriphenylphosphonium-tetrafluoroborat, Methyltriphenylphosphonium-hexafluorophosphat, Tetraphenylphosphonium-bromid, Bis-(4-phenyl)-methylnaphthylphosphonium-toluol-4-sulfonat, Methyl-4-phenyldiphenylphosphonium-toluol-4-sulfonat, Methyl-3,5-bisphenyldiphenylphosphonium-toluol-4-sulfonat, Vinylbenzyltriphenylphosphonium-toluol-4-sulfonat, Bis-(4-methoxyphenyl)methylphenylphosphonium-toluol-4-sulfonat, Methyl-4-methoxyphenyldiphenylphosphonium-toluol-4-sulfonat, Bis-(4-methoxyphenyl)-methylphenylphosphonium-toluol-4-sulfonat, dodecyltributylphosphonium-p-toluolsulfonat, Bis-(4-methoxyphenyl)methylphenylphosphonium-p-toluolsulfonat, Bis-(3-hydroxypropyl)methylphenylphosphonium-p-toluolsulfonat, Bis-(4-acetoxyphenyl)methylphenylphosphonium-p-toluolsulfonat, Tris-(4-acetoxyphenyl)-methylphosphonium-toluol-4-sulfonat, Methyltriphenylphosphonium-toluol-4-sulfonat, Dodecyltriphenylphosphonium-toluol-4-sulfonat, Methyltriphenylphosphonium-phenylsulfonat, Ethyltriphenylphosphonium-toluol-4-sulfonat, Phenethyltriphenylphosphonium-toluol-4-sulfonat, Ethylene-bis-(triphenylphosphonium-toluol-4-sulfonat), Methyltriphenylphosphonium-tetraphenylborat, Tris-(methoxyphenyl)methylphosphonium-toluol-4-sulfonat, Methyltritolylphosphonium-toluol-4-sulfonat, Tris-(chlorophenyl)methylphosphonium-toluol-4-sulfonat, Tris-(carbomethoxyphenyl)methylphosphonium-toluol-4-sulfonat, Benzyltriphenylphosphonium-phosphomolybdat, Benzyltriphenylphosphonium-silicowolframat, Methyltriphenylphosphonium-phosphomolybdat, Benzyltriphenylphosphonium-phosphowolframat, Methyl-4-carbomethoxyphenyldiphenylphosphonium-toluol-4-sulfonat, Methyl-4-acetoxyphenyldiphenylphosphonium-toluol-4-sulfonat, Tetraoctylphosphoniumhydroxyd sowie die aufgeführten quaternären Phosphoniumverbindungen in ihrer Form als 2-Hydroxynaphthyl-6-carboxylat bzw. als 4-(3-Hydroxy-2-naphthoylamino)-phenylsulfonat oder als 2-Hydroxyphenyl-3-carboxylat.

Die erfindungsgemäß zur Anwendung gelangenden Verbindungen können im Pulverlack bzw. Pulver gelöst oder dispergiert vorliegen. Die Einarbeitung kann in an sich bekannter Weise, beispielsweise durch Mischen und Extrudieren oder Einkneten der salzartigen Verbindung in das zugrundeliegende Harz, z.B. Polyesterharz erfolgen. Die erfindungsgemäß eingesetzten Verbindungen können als getrocknete und

gemahlene Pulver, als Dispersion oder Masterbatch oder in sonstiger geeigneter Form oder in Lösung zugegeben werden. Ebenso können die Verbindungen auch grundsätzlich schon bei der Herstellung der jeweiligen Pulver(lack)harze zugegeben werden, d.h. im Verlauf deren Polymerisation oder Polykondensation. Ein Vorteil der erfindungsgemäßen Verbindungen besteht darin, daß die Einarbeitung erfolgt, ohne daß hierzu speziell entwickelte Pulverrezepturen erforderlich sind, was wiederum die allgemeine Verwendbarkeit der genannten Verbindungen einschränken würde; die Einarbeitung der Verbindungen besteht lediglich in der Zugabe während des dazu ausgewählten Arbeitsschrittes bei der Pulver(lack)herstellung; ein zusätzlicher Verfahrensschritt wird nicht benötigt.

Der Vorteil, daß die erfindungsgemäßen Verbindungen im Pulverlack bzw. Pulver gelöst oder dispergiert vorliegen, besteht darin, daß alle Pulverteilchen gleichermaßen eine erhöhte elektrostatische Aufladbarkeit aufweisen, es also nicht zu uneinheitlichen Effekten kommen kann. Ebenso wenig können Uneinheitlichkeiten auf Grund von Zudosierungsschwierigkeiten, ungenügender Vermengung oder wegen Entmischung auftreten.

Die erfindungsgemäß zur Anwendung gelangenden Verbindungen können in pigmentierten oder nicht-pigmentierten (Klarlack), bunten oder unbunten Pulverlack- bzw. Pulverlacksystemen eingesetzt werden.

Da der Zusatz der salzartigen, kationischen Verbindungen zur Erhöhung der Aufladbarkeit und zur Verbesserung von Umgriff und Abscheidequote andererseits die sonstigen mechanischen Eigenschaften und die Verarbeitbarkeit möglichst wenig beeinträchtigen darf, d.h. die Zusatzmenge möglichst gering sein sollte, ist es von großem Vorteil, daß es sich bei den erfindungsgemäß zur Anwendung gelangenden Verbindungen um hochwirksame Produkte handelt.

Die Pulverlacke bzw. Pulver, in denen die kationischen Verbindungen der genannten Formel (1) enthalten sind, können zum Beschichten von beispielsweise Metall, Kunststoff, Holz, Keramik, Beton, Glas, Textilien oder Papier eingesetzt werden.

Von ganz besonderem Vorteil ist, daß die Verwendung der erfindungsgemäß eingesetzten Verbindungen in Pulverlacken oder Pulvern, insbesondere in triboelektrisch versprühbaren Pulverlacken, eine größere Auswahl an Harzen ermöglicht und neue Harzsysteme erschließt. Während bisher im wesentlichen nur Pulverlacke auf reiner Epoxidharzbasis zufriedenstellend triboelektrisch versprühbar waren, kann jetzt auch auf andere Harzsysteme zurückgegriffen werden. Insbesondere können nun auch Pulverlacke auf Basis von Polyesterharzen durch Verwendung der erfindungsgemäß zur Anwendung gelangenden Verbindungen triboelektrisch appliziert werden.

Ein weiterer Vorteil der Verwendung der kationischen Verbindungen der genannten Formel (1) ist die erhöhte Abscheidequote der Pulverlacke. Sie ermöglicht kürzere Aufsprühzeiten, was in vielerlei Hinsicht günstig, beispielsweise kostensenkend ist. In Kombination mit der erhöhten Aufladbarkeit und dem verbesserten Umgriff kann erreicht werden, daß nicht nur eine erhöhte Abscheidung des versprühten Pulverlackes auf den großen Flächen erfolgt, sondern auch eine gleichmäßige Beschichtung in Hohlräumen, Innenkanten und -ecken sowie auf der Rückseite der Gegenstände ermöglicht wird. Die besprühten Gegenstände (Werkstücke) lassen sich somit gleichmäßiger beschichten.

Die in den nachstehenden Beispielen aufgeführten Pulverlacke wurden durch Extrudieren hergestellt und sind hinsichtlich des Herstellungsverfahrens und der Teilchengrößenverteilung (mittlere Teilchengröße 50 $\mu$m) untereinander vergleichbar. Die Triboversprühung der Pulver(lacke) wurde mit dem Sprühgerät "Tribo Star" der Firma Intec (Dortmund) mit einem Normsprührohr und einer Sterninnenstange bei maximalem Pulverdurchsatz mit einem Sprühdruck von 3 bar durchgeführt. Der zu besprühende Gegenstand, ein vielfach gekanteter Metallwürfel (Größe ca. 5 x 5 x 5 cm) wurde in einer Spritzkabine aufgehängt und aus ca. 20 cm Abstand direkt von vorne ohne weitere Bewegung des Sprühgerätes besprüht. Die jeweilige Aufladung des versprühten Pulvers wurde mit einem "Meßgerät zur Messung von triboelektrischer Ladung von Pulvern" der Firma Intec (Dortmund) gemessen. Zur Messung wird die Meßantenne des Meßgerätes direkt in die aus dem Sprühgerät austretende Pulverwolke gehalten. Die aus der elektrostatischen Ladung von Pulverlack oder Pulver sich ergebene Stromstärke wird in $\mu$A angezeigt. Umgriff und Deckvermögen wurden visuell beurteilt. Insbesondere wurde beachtet, inwieweit Rückseiten, Hohlräume, Innenkanten und -ecken und Vertiefungen hinter Kanten gleichmäßig mit Lack belegt waren. Die visuelle Beurteilung wird gemäß Bewertungsskala 2.1 DIN 53 230 mit Kennzahlen von 0 bis 5 angegeben. Hierbei ist 0 die bestmögliche und 5 die schlechtestmögliche Bewertung.

Die nachstehenden Beispiele dienen zur Erläuterung der Erfindung, ohne sie darauf zu beschränken. Die angegebenen Teile bedeuten Gewichtsteile.

**Beispiel 1 (Vergleichsbeispiel)**

Ein Pulverlack der Zusammensetzung

| | | |
|---|---|---|
| ®Alftalat AN 721 | (Carboxylgruppenhaltiger Polyester der HOECHST AG) | 399 Teile |
| ®Beckopox EP 303 | (Epoxidharz Typ 3 der HOECHST AG) | 171 Teile |
| ®Kronos 2160 | (Titandioxid der Firma Kronos Titan GmbH) | 295 Teile |
| Blanc Fixe F | (Bariumsulfat der Firma Sachtleben Chemie GmbH) | 100 Teile |
| ®Additol XL 496 | (Verlaufsmittel der HOECHST AG) | 30 Teile |
| Benzoin | | 5 Teile |
| | | 1000 Teile |

erfährt bei der triboelektrischen Versprühung unter Verwendung einer 38 cm langen Sterninnenstange eine elektrostatische Aufladung, die einer Stromstärke von 0,9 bis 1,2 µA entspricht.

Die visuelle Beurteilung des besprühten Werkstückes (Besprühdauer 5 Sekunden) ergab die Kennzahl 4; die abgeschiedene Pulvermenge nach 5 Sekunden betrug 1,4 g.

Bei Verwendung einer 15 cm langen Sterninnenstange erfährt der Pulverlack bei der triboelektrischen Versprühung eine Aufladung, die einer Stromstärke von 0,3 bis 0,4 µA entspricht.

**Beispiel 2**

In einen Pulverlack der in Beispiel 1 beschriebenen Zusammensetzung wird 1 Gewichtsprozent von Tetrabutylphosphoniumbromid homogen eingearbeitet unter Verwendung einer 38 cm langen Sterninnenstange.

Bei der triboelektrischen Versprühung unter Verwendung einer 38 cm langen Sterninnenstange wird eine elektrostatische Aufladung erreicht, die einer Stromstärke von 2,4 bis 2,6 µA entspricht.

Die visuelle Beurteilung des besprühten Werkstückes (Besprühdauer 5 Sekunden) ergab die Kennzahl 2. Die nach 5 Sekunden abgeschiedene Pulvermenge betrug 1,6 g.

**Beispiel 3**

Ein Pulverlack der in Beispiel 2 beschriebenen Zusammensetzung, welcher jedoch statt 1 Gewichtsprozent 2 Gewichtsprozent des dort genannten Additives enthält, erfährt bei der triboelektrischen Versprühung unter Verwendung einer 38 cm langen Sterninnenstange eine elektrostatische Aufladung, die einer Stromstärke von 3,2 bis 3,4 µA entspricht.

Die visuelle Beurteilung des besprühten Werkstückes (Sprühdauer 5 Sekunden) ergab die Kennzahl 2. Die nach 5 Sekunden abgeschiedene Pulvermenge betrug 1,9 g.

**Beispiel 4**

In einen Pulverlack der in Beispiel 1 beschriebenen Zusammensetzung, wird 0,5 Gewichtsprozent von Tetraphenylphosphoniumbromid homogen eingearbeitet.

Bei der triboelektrischen Versprühung unter Verwendung einer 38 cm langen Sterninnenstange wird eine elektrostatische Aufladung erreicht, die einer Stromstärke von 2,4 bis 2,6 µA entspricht.

Die visuelle Beurteilung des besprühten Werkstückes (Sprühdauer 5 Sekunden) ergab die Kennzahl 2. Die nach 5 Sekunden abgeschiedene Pulvermenge betrug 1,8 g.

Bei Verwendung einer 16 cm langen Sterninnenstange erfährt der Pulverlack bei der triboelektrischen Versprühung eine Aufladung, die einer Stromstärke von 1,9 µA entspricht.

**Beispiel 5**

Ein Pulverlack der in Beispiel 4 beschriebenen Zusammensetzung, welcher jedoch statt 0,5 Gewichtsprozent 1 Gewichtsprozent des dort genannten Additives enthält, erfährt bei der triboelektrischen Versprühung unter Verwendung einer 38 cm langen Sterninnenstange eine elektrostatische Aufladung, die einer Stromstärke von 3,9 bis 4,1 µA entspricht.

Die visuelle Beurteilung des besprühten Werkstückes (Sprühdauer 5 Sekunden) ergab die Kennzahl 2. Die nach 5 Sekunden abgeschiedene Pulvermenge betrug 2,0 g.

Bei Verwendung einer 15 cm langen Sterninnenstange erfährt der Pulverlack bei der triboelektrischen Versprühung eine Aufladung, die einer Stromstärke von 2,6 bis 2,8 µA entspricht.

**Beispiel 6** (Vergleichsbeispiel)

Ein Pulver, bestehend aus reinem Stryol-Methacryl-Copolymerisat (®Dialec S 309 der Firma Diamond Shamrock) erfährt bei der triboelektrischen Versprühung sowohl unter Verwendung einer 38 cm langen als auch bei Verwendung einer 15 cm langen Sterninnenstange eine elektrostatische Aufladung, die einer Stromstärke von ±0 µA entspricht.

**Beispiel 7**

In der Pulver der in Beispiel 6 beschriebenen Zusammensetzung wird 1 Gewichtsprozent des in Beispiel 2 genannten Additives homogen eingearbeitet. Bei der triboelektrischen Versprühung unter Verwendung einer 38 cm langen Sterninnenstange wird eine elektrostatische Aufladung erreicht, die einer Stromstärke von 7,8 bis 8,0 µA entspricht.

Bei Verwendung einer 15 cm langen Sterninnenstange erfährt das Pulver bei der triboelektrischen Versprühung eine Aufladung, die einer Stromstärke von 4,8 bis 5,0 µA entspricht.

**Beispiel 8**

In ein Pulver der in Beispiel 4 beschriebenen Zusammensetzung wird 1 Gewichtsprozent des in Beispiel 6 genannten Additives homogen eingearbeitet. Bei der triboelektrischen Versprühung wird eine elektrostatische Aufladung erreicht, die unter Verwendung einer 38 cm langen Sterninnenstange einer Stromstärke von 7,6 bis 8,0 µA entspricht.

Bei Verwendung einer 15 cm langen Sterninnenstange erfährt das Pulver bei der triboelektrischen Versprühung eine Aufladung, die einer Sromstärke von 4,5 bis 5,0 µA entspricht.

**Beispiel 9**

In ein Pulver, wie in Beispiel 6 beschrieben, wird 1 Gewichtsprozent Tetrabutlyphosphoniumchlorid homogen eingearbeitet.

Bei der triboelektrischen Versprühung unter Verwendung einer 38 cm langen Sterninnenstange wird eine elektrostatische Aufladung erreicht, die einer Stromstärke von 8,0 bis 8,2 µA entspricht.

Bei Verwendung einer 15 cm langen Sterninnenstange erfährt das Pulver bei der triboelektrischen Versprühung eine Aufladung, die einer Stromstärke von 5,0 bis 5,2 µA entspricht.

**Beispiel 10**

In ein Pulver, wie in Beispiel 6 beschrieben, wird 1 Gewichtsprozent Tributylhexadecylphosphoniumbromid homogen eingearbeitet.

Bei der triboelektrischen Versprühung unter Verwendung einer 38 cm langen Sterninnenstange erfährt das Pulver eine Aufladung, die einer Stromstärke von 7,4 bis 7,8 µA entspricht.

Bei Verwendung einer 15 cm langen Sterninnenstange erfährt der Pulverlack bei der triboelektrischen Versprühung eine Aufladung, die einer Sromstärke von 4,6 bis 5,0 µA entspricht.

**Beispiel 11**

In ein Pulver, wie in Beispiel 6 beschrieben, wird 1 Gewichtsprozent des Tetraoctylphosphoniumhydroxids homogen eingearbeitet.

Bei der triboelektrischen Versprühung unter Verwendung einer 38 cm langen Sterninnenstange erfährt das Pulver eine Aufladung, die einer Stromstärke von 2,6 bis 2,8 µA entspricht.

Bei Verwendung einer 15 cm langen Sterninnenstange erfährt das Pulver bei der triboelektrischen Versprühung eine Aufladung, die einer Stromstärke von 1,8 bis 1,9 µA entspricht.

**Beispiel 12**

In ein Pulver, wie in Beispiel 6 beschrieben, wird 1 Gewichtsprozent Tetraoctylphosphoniumbromid homogen eingearbeitet.

Bei der triboelektrischen Versprühung unter Verwendung einer 38 cm langen Sterninnenstange erfährt das Pulver eine Aufladung, die einer Stromstärke von 3,9 bis 4,1 µA entspricht.

Bei Verwendung einer 15 cm langen Sterninnenstange erfährt das Pulver bei der triboelektrischen Versprühung eine Aufladung, die einer Stromstärke von 3,0 bis 3,2 µA entspricht.

## Patentansprüche

**1.** Verfahren zur Erhöhung der elektrostatischen Aufladbarkeit von zur Oberflächenbeschichtung von festen Gegenständen vorgesehenen Pulverlacken oder Pulvern, dadurch gekennzeichnet, daß man in Pulverlacke oder Pulver mindestens eine salzartige, kationische Verbindung der allgemeinen Formel (1)

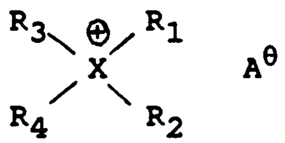

(1)

in welcher $R_1$, $R_2$, $R_3$ und $R_4$ unabhängig voneinander Wasserstoffatome, geradkettige oder verzweigte Alkylgruppen von 1 bis 30 Kohlenstoffatomen, ein- oder mehrkernige cycloaliphatische Reste von 5 bis 12 Kohlenstoffatomen, Oxethylgruppen der allgemeinen Formel $-(CH_2-CH_2-O)_n-R$, worin n eine Zahl von 1 bis 10 und R ein Wasserstoffatom, eine Alkyl($C_1$-$C_4$)- oder Acylgruppe darstellen, ferner ein-oder mehrkernige aromatische Reste oder araliphatische Reste bedeuten, wobei die aliphatischen, aromatischen und araliphatischen Reste durch Hydroxy-, Alkoxy($C_1$-$C_4$)-, sekundäre oder tertiäre Aminogruppen, Säureamidgruppen und/oder Säureimidgruppen substituiert sein können, wobei die Alkyl-, Cycloalkyl-, Aralkyl- und Arylreste für $R_1$ bis $R_4$ durch Fluor-, Chlor- oder Bromatome substituiert sein können, X ein Phosphor-, Arsen- oder Antimonatom bedeutet, wobei für den Fall, daß X ein Arsen- oder Antimonatom darstellt, mindestens einer der Reste $R_1$-$R_4$ kein Wasserstoffatom ist, und $A^\theta$ das Äquivalent eines anorganischen oder organischen Anions darstellt, in einer Menge von etwa 0,01 bis etwa 10 Gewichtsprozent homogen einarbeitet, wobei die salzartigen, kationischen Verbindungen der allgemeinen Formel (1) im Pulver bzw. im Lacksystem gelöst oder dispergiert werden.

**2.** Verfahren nach Anspruch 1, dadurch gekennzeichnet, daß in der dort genannten allgemeinen Formel (1) $R_1$, $R_2$, $R_3$ und $R_4$ unabhängig voneinander Alkylgruppen von 1 bis 22 Kohlenstoffatomen, Phenylgruppen, Benzylgruppen und/oder Oxethylgruppen der allgemeinen Formel $-(CH_2-CH_2-O)_n-R$, worin n eine Zahl von 1 bis 10 und R ein Wasserstoffatom, eine Alkyl ($C_1$-$C_4$)- oder Acylgruppe darstellen, und $A^\theta$ Chorid, Bromid, Sulfat, Hydrogensulfat, Hydroxid, Tetrafluoroborat, Hexafluorophosphat, Thiocyanat, Perchlorat, Hexafluoroarsenat, meta-Phosphat, ortho-Phosphat, Molybdat, Wolframat, Phosphomolybdat, das Äquivalent eines Anions einer Iso- oder Heteropolysäure des Phosphors, Molybdäns, Wolframs oder Siliziums, einer Phosphonsäure, Phenolcarbonsäure, Phenolsulfonsäure, Naphtholcarbonsäure oder Naphtholsulfonsäure bedeuten.

**3.** Verfahren nach mindestens einem der Ansprüche 1 und 2, dadurch gekennzeichnet, daß man die kationischen Verbindungen der in Anspruch 1 genannten allgemeinen Formel (1) in einer Menge von etwa 0,1 bis etwa 5 Gewichtsprozent in die Pulverlacke oder Pulver homogen einarbeitet.

**4.** Verfahren nach mindestens einem der Ansprüche 1 bis 3, dadurch gekennzeichnet, daß den Pulverlakken oder Pulvern, in welche die kationischen Verbindungen der in Anspruch 1 genannten allgemeinen Formel (1) homogen eingearbeitet werden, Epoxidharze, hydroxyl- und carboxylgruppenhaltige Polyesterharze oder Acrylharze oder Kombinationen daraus zugrundeliegen.

5. Verfahren nach mindestens einem der Ansprüche 1 bis 4, dadurch gekennzeichnet, daß man die kationischen Verbindungen der in Anspruch 1 genannten allgemeinen Formel (1) in Form eines getrockneten und gemahlenen Pulvers oder in Form einer Dispersion, eines Masterbatch oder einer Lösung in die Pulverlacke oder Pulver homogen einarbeitet.

6. Verwendung von Pulverlacken oder Pulvern, deren elektrostatische Aufladbarkeit gemäß einem oder mehreren der Ansprüche 1 bis 5 erhöht wurde, zur Oberflächenbeschichtung von Gegenständen aus Metall, Holz, Kunststoff, Glas, Keramik, Beton, Textilmaterial, Papier oder Kautschuk.

7. Verwendung von Pulverlacken oder Pulvern, enthaltend Epoxid, carboxyl- und hydroxylgruppenhaltige Polyester- oder Acrylharze oder Kombinationen daraus, und,homogen verteilt, gelöst oder dispergiert, etwa 0,01 bis etwa 10 Gewichtsprozent mindestens einer kationischen Verbindung der in Anspruch 1 genannten allgemeinen Formel (1) zur Oberflächenbeschichtung von Gegenständen aus Metall, Holz, Kunststoff, Glas, Keramik, Beton, Textilmaterial, Papier oder Kautschuk.

8. Pulverlacke oder Pulver, enthaltend Epoxid-, carboxyl-und hydroxylgruppenhaltige Polyester- oder Acrylharze oder Kombinationen daraus, und, homogen verteilt, gelöst oder dispergiert, etwa 0,01 bis etwa 10 Gewichtsprozent mindestens einer salzartigen, kationischen Verbindung der allgemeinen Formel (1)

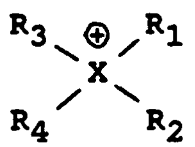 $A^{\ominus}$ (1)

in welcher $R_1$, $R_2$, $R_3$ und $R_4$ unabhängig voneinander Wasserstoffatome, geradkettige oder verzweigte Alkylgruppen von1 bis 30 Kohlenstoffatomen, ein- oder mehrkernige cycloaliphatische Reste von 5 bis 12 Kohlenstoffatomen, Oxethylgruppen der allgemeinen Formel $-(CH_2-CH_2-O)_n-R$, worin n eine Zahl von 1 bis 10 und R ein Wasserstoffatom, eine Alkyl($C_1$-$C_4$)- oder Acylgruppe darstellen, ferner ein-oder mehrkernige aromatische Reste oder araliphatische Reste bedeuten, wobei die aliphatischen, aromatischen und araliphatischen Reste durch Hydroxy-, Alkoxy($C_1$-$C_4$)-, sekundäre oder tertiäre Aminogruppen, Säureamidgruppen und/oder Säureimidgruppen substituiert sein können, wobei die Alkyl-, Cycloalkyl-, Aralkyl- und Arylreste für $R_1$ bis $R_4$ durch Fluor-, Chlor- oder Bromatome substituiert sein können, X ein Phosphor-, Arsen- oder Antimonatom bedeutet, wobei für den Fall, daß X ein Arsen- oder Antimonatom darstellt, mindestens einer der Reste $R_1$-$R_4$ kein Wasserstoffatom darstellt und $A^{\theta}$ das Äquivalent eines anorganischen oder organischen Anions darstellt.

## Claims

1. A process for enhancing the electrostatic charge-ability of powder coatings or powders intended for surface-coating solid objects, which comprises homogeneously incorporating at least one salt-like, cationic compound of the formula (1)

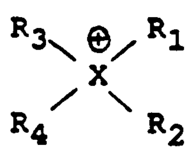 $A^{\ominus}$ (1)

in which $R_1$, $R_2$, $R_3$ and $R_4$, independently of one another, denote hydrogen atoms, straight-chain or branched alkyl groups having 1 to 30 carbon atoms, mononuclear or polynuclear cycloaliphatic radicals having 5 to 12 carbon atoms, oxethyl groups of the formula $-(CH_2-CH_2-O)_n-R$ in which n denotes a number from 1 to 10 and R denotes a hydrogen atom, a ($C_1$-$C_4$)-alkyl or acyl group, furthermore denote mononuclear or polynuclear aromatic radicals or araliphatic radicals, where the aliphatic, aromatic and araliphatic radicals may be substituted by hydroxyl, ($C_1$-$C_4$) alkoxy, secondary or tertiary amino groups, acid amide groups and/or acid imide groups, and where the alkyl, cycloakyl, aralkyl and aryl radicals for $R_1$ to $R_4$ may be substituted by fluorine, chlorine or bromine atoms, X denotes a

phosphorus, arsenic or antimony atom, where, in the case where X denotes an arsenic or antimony atom, at least one of the radicals $R_1$-$R_4$ is not a hydrogen atom, and $A^{\theta}$ denotes the equivalent of an inorganic or organic anion, in an amount from about 0.01 to about 10 percent by weight into powder coatings or powders, the salt-like, cationic compounds of the formula (1) being dissolved or dispersed in the powder or coating system.

**2.** The process as claimed in claim 1, wherein, in the formula (1) mentioned therein, $R_1$, $R_2$, $R_3$ and $R_4$, independently of one another, denote alkyl groups having 1 to 22 carbon atoms, phenyl groups, benzyl groups and/or oxethyl groups of the formula $-(CH_2-CH_2-O)_n-R$ in which n denotes a number from 1 to 10 and R denotes a hydrogen atom, a $(C_1$-$C_4)$-alkyl or acyl group, and $A^{\theta}$ denotes chloride, bromide, sulfate, hydrogen sulfate, hydroxide, tetrafluoro-borate, hexafluorophosphate, thiocyanate, perchlorate, hexafluoroarsenate, metaphosphate, ortho-phosphate, molybdate, tungstate, phosphomolybdate, the equivalent of an onion of an iso- or heteropolyacid of phosphorus, molybdenum, tungsten or silicon, of a phosphonic acid, phenolcarboxcylic acid, phenol-sulphonic acid, naphtholcarboxyclic acid or naphthol-sulfonic acid.

**3.** The process as claimed in at least one of claims 1, and 2, wherein the cationic compounds of the formula (1) mentioned in claim 1, are homogeneously incorporated into the powder coatings or powders in an amount from about 0.1 to about 5 percent by weight.

**4.** The process as claimed in at least one of claims 1, to 3, wherein the powder coatings or powders into which the cationic compounds of the formula (1) mentioned in claim 1 are homogeneously incorporated are based on epoxy resins, hydroxyl- and carboxyl-containing polyester resins or acrylic resins, or combinations thereof.

**5.** The process as claimed in at least one of claims 1, to 4, wherein the cationic compounds of the formula (1) mentioned in claim 1 are incorporated homogeneously in the form of a dried and ground powder or in the form of a dispersion, of a masterbatch or a solution, into the powder coatings or powders.

**6.** The use of powder coatings or powders whose electrostatic chargeability has been enhanced as claimed in one or more of claims 1 to 5, for the surface-coating of objects made of metal, wood, plastic, glass, ceramic, concrete, textile material, paper or rubber.

**7.** The use of powder coatings or powders containing epoxy resins, carboxyl- and hydroxyl-containing polyester resins or acrylic resins, or combinations thereof, and, distributed homogeneously, dissolved or dispersed, about 0.01 to about 10 percent by weight of at least one cationic compound of the formula (1) mentioned in claim 1, for the surface-coating of objects made of metal, wood, plastic, glass, ceramic, concrete, textile material, paper or rubber.

**8.** A powder coating or powder containing epoxy resins, carboxyl- and hydroxyl-containing polyester resins or acrylic resins, or combinations thereof, and, homogeneously distributed, dissolved or dispersed, about 0.01 to about 10 percent by weight of at least one salt-like, cationic compound of the formula (1)

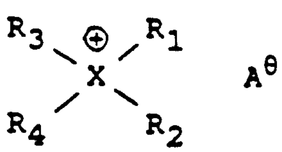 (1)

in which $R_1$, $R_2$, $R_3$ and $R_4$, independently of one another, denote hydrogen atoms, straight-chain or branched alkyl groups having 1 to 30 carbon atoms, mononuclear or polynuclear cycloaliphatic radicals having 5 to 12 carbon atoms, oxethyl groups of the formula $-(CH_2-CH_2-O)_n-R$ in which n denotes a number from 1 to 10 and R denotes a hydrogen atom, a $(C_1$-$C_4)$-alkyl or acyl group, furthermore denote mononuclear or polynuclear aromatic radicals or araliphatic radicals, where the aliphatic, aromatic and araliphatic radicals may be substituted by hydroxyl, $(C_1$-$C_4)$ alkoxy, secondary or tertiary amino groups, acid amide groups and/or acid imide groups, where the alkyl, cycloalkyl, aralkyl and aryl radicals for $R_1$ to $R_4$ may be substituted by fluorine, chlorine or bromine atoms, X denotes a

phosphorus, arsenic or antimony atom, where, in the case where X denotes an arsenic or antimony atom, at least one of the radicals $R_1$-$R_4$ does not denote a hydrogen atom, and $A^{\theta}$ denotes the equivalent of an inorganic or organic anion.

## Revendications

1. Procédé pour augmenter l'aptitude à la charge électrostatique de vernis en poudre ou de poudres destinés au revêtement superficiel d'objets solides, caractérisé en ce qu'on incorpore jusqu'à homogénéité, en une quantité d'environ 0,01 à environ 10 % en poids, dans des vernis en poudre ou des poudres, au moins un composé cationique salin de formule générale (1)

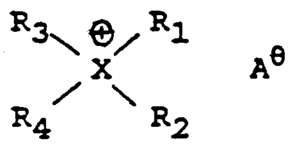

(1)

dans laquelle $R_1$, $R_2$, $R_3$ et $R_4$, indépendamment les uns des autres, représentent chacun un atome d'hydrogène, un groupe alkyle à chaîne droite ou ramifiée ayant 1 à 30 atomes de carbone, un radical cycloaliphatique mono- ou polycyclique ayant 5 à 12 atomes de carbone, un groupe oxéthyle de formule générale $-(CH_2-CH_2-O)_n-R$ où n est un nombre de 1 à 10 et R est un atome d'hydrogène, un groupe alkyle en $C_1$-$C_4$ ou un groupe acyle, et de plus représentent chacun un radical aromatique ou un radical araliphatique mono- ou poly-cyclique, où les radicaux aliphatiques, aromatiques et araliphatiques peuvent être substitués par des groupes hydroxy, alcoxy en $C_1$-$C_4$, amino secondaire ou tertiaire, par des groupes amide d'acide et/ou par des groupe imide d'acide, où les radicaux alkyle, cycloalkyle, aralkyle et aryle représentant $R_1$ à $R_4$ peuvent être substitués par des atomes de fluor, de chlore ou de brome, X est un atome de phosphore, d'arsenic ou d'antimoine, où, quand X est un atome d'arsenic ou d'antimoine, au moins l'un des radicaux $R_1$ à $R_4$ n'est pas un atome d'hydrogène, et $A^-$ est l'équivalent d'un anion minéral ou organique, les composés cationiques salins de formule générale (1) étant dispersés ou dissous dans la poudre ou dans le système de vernis.

2. Procédé selon la revendication 1, caractérisé en ce que, dans la formule générale (1) qui y est mentionnée, $R_1$, $R_2$, $R_3$ et $R_4$, indépendamment les uns des autres, représentent chacun un groupe alkyle ayant 1 à 22 atomes de carbone, un groupe phényle, un groupe benzyle et/ou un groupe oxéthyle de formule générale $-(CH_2-CH_2-O)_n-R$ où n est un nombre de 1 à 10 et R est un atome d'hydrogène, un radical alkyle en $C_1$-$C_4$ ou acyle, et $A^-$ est un anion chlorure, bromure, sulfate, hydrogénosulfate, hydroxyde, tétrafluoroborate, hexafluorophosphate, thiocyanate, perchlorate, hexafluoroarséniate, métaphosphate, orthophosphate, molybdate, tungstate, phosphomolybdate, l'équivalent d'un anion d'un iso- ou hétéropolyacide du phosphore, du molybdène, du tungstène ou du silicium, d'un acide phosphonique, d'un acide phénolcarboxylique, d'un acide phénolsulfonique, d'un acide naphtolcarboxylique ou d'un acide naphtolsulfonique.

3. Procédé selon au moins l'une des revendications 1 ou 2, caractérisé en ce qu'on incorpore les composés cationiques ayant la formule générale (1) mentionnée dans la revendication 1 dans les vernis en poudre ou la poudre, jusqu'à homogénéité, en une quantité d'environ 0,1 à environ 5 % en poids.

4. Procédé selon au moins l'une des revendications 1 à 3, caractérisé en ce que les vernis en poudre ou les poudres dans lesquels on incorpore jusqu'à homogénéité les composés cationiques ayant la formule générale (1) mentionnée dans la revendication 1 se fondent sur des résines époxydes, des résines de polyester hydroxylées et carboxylées ou des résines acryliques, ou leurs combinaisons.

5. Procédé selon au moins l'une des revendications 1 à 4, caractérisé en ce qu'on incorpore jusqu'à homogénéité dans les vernis en poudre ou dans les poudres les composés cationiques ayant la formule générale (1) mentionnée dans la revendication 1 sous la forme d'une poudre séchée et broyée ou sous la forme d'une dispersion, d'un mélangemaître ou d'une solution.

6. Utilisation de vernis en poudre ou de poudres, dont on a augmenté l'aptitude à la charge électrostatique selon l'une ou plusieurs des revendications 1 à 5, pour le revêtement superficiel d'objets en métal, en bois, en matière plastique, en verre, en céramique, en béton, en un matériau textile, en papier ou en caoutchouc.

7. Utilisation de vernis en poudre ou de poudres contenant des résines époxydes, des résines de polyester carboxylées et hydroxylées ou des résines acryliques ou leurs combinaisons, et, répartis, dissous ou dispersés jusqu'à homogénéité, environ 0,01 à environ 10 % en poids d'au moins un composé cationique ayant la formule générale (1) mentionnée dans la revendication 1 pour le revêtement superficiel d'objets en métal, en bois, en matière plastique, en verre, en céramique, en béton, en un matériau textile, en papier ou en caoutchouc.

8. Vernis en poudre ou poudres contenant des résines époxydes, des résines de polyester carboxylées et hydroxylées ou des résines acryliques ou leurs combinaisons et, répartis, dissous ou dispersés jusqu'à homogénéité, environ 0,01 à environ 10 % en poids d'au moins un composé cationique de formule générale (1)

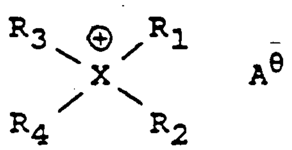

(1)

dans laquelle $R_1$, $R_2$, $R_3$ et $R_4$, indépendamment les uns des autres, représentent chacun un atome d'hydrogène, un groupe alkyle à chaîne droite ou ramifiée ayant 1 à 30 atomes de carbone, un radical cycloaliphatique mono- ou polycyclique ayant 5 à 12 atomes de carbone, un groupe oxéthyle de formule générale $-(CH_2-CH_2-O)_n-R$ où n est un nombre de 1 à 10 et R est un atome d'hydrogène, un groupe alkyle en $C_1$-$C_4$ ou un groupe acyle, et de plus représentent chacun un radical aromatique ou un radical araliphatique mono- ou polycyclique, où les radicaux aliphatiques, aromatiques et araliphatiques peuvent être substitués par des groupes hydroxy, alcoxy en $C_1$-$C_4$, amino secondaire ou tertiaire, par des groupes amide d'acide et/ou par des groupe imide d'acide, où les radicaux alkyle, cycloalkyle, aralkyle et aryle représentant $R_1$ à $R_4$ peuvent être substitués par des atomes de fluor, de chlore ou de brome, X est un atome de phosphore, d'arsenic ou d'antimoine, où, quand X est un atome d'arsenic ou d'antimoine, au moins l'un des radicaux $R_1$ à $R_4$ n'est pas un atome d'hydrogène, et $A^-$ est l'équivalent d'un anion minéral ou organique.